# EUROPEAN PATENT APPLICATION

(11) **EP 2 608 018 A1**
(43) Date of publication of application: **26.06.2013**
(21) Application number: 11195274.3
(22) Date of filing: 22.12.2011
(51) Int. Cl.: G06F 9/44

(54) **Customizing a GUI of a MES screen**

(71) Applicant: Siemens Aktiengesellschaft, 80333 München (DE)
(72) Inventor: Belotti, Simone, 16148 Genova (IT); Noferi, Stefano, 16149 Genoa (IT)
(74) Representative: Fischer, Michael

(57) **Abstract**

The present invention provides a method and system for customizing a user-interface of a screen of a general purpose MES software application taking into account a specific customer requirement, comprising: a) providing within the MES application at least one page-screen containing at least one configurable graphic control that contains at least one area that can be customized, hereinafter called custom area; b) providing a graphic configuration tool for enabling the configuration of the configurable graphic control of the page-screen user-interface in at least one custom area; b) at engineering time, through the configuration tool, exploring the page-screen so that, a tree is presented in which each node represents a configurable graphic control; c) at engineering time, through the configuration tool, selecting a given node representing a given configurable graphic control and at least one associated custom area to be customized according to a given specific customer requirement; d) at engineering time, developing an ASP.net control by writing its software code in order to meet said given specific customer requirement; e) at engineering time, specifying, through the configuration tool, the information of the developed additional ASP.net control for linking it to the custom area of the configurable graphic control; f) at engineering time, storing the information for linking the custom area of the given configurable graphic control on the web server or on a database.

## Description

The present invention relates to a method and to a system for customizing a GUI of a MES screen according to the preamble of claims 1 and 10 respectively.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

The Siemens Corp. offers a broad range of MES products, under its SIMATIC® product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95 or S95. The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems developed by software suppliers is to provide manufacturing companies (the customers) with tools for measuring and controlling production activities with the aim of boosting profitability, increasing productivity, improving quality and process performance to manufacturing plants.

As used herein, a software application is a set of software components developed by software developers to perform some useful actions within a MES system, e.g. monitoring values coming from plant process or controlling a plant device.

Typically, at engineering or configuration time, system engineers flexibly customize MES applications according to the specific manufacturing plant requirements.

Instead, at runtime, MES applications are utilized by end-users who may be plant operators or line responsible personnel.

MES systems are provided with front-end/client GUI applications which may be used by end-users to plan and control manufacturing activities.

MES GUI applications play a key role in bringing together process, quality and business information from various sources into one unified real-time view of the production status of the plant. In fact, MES GUI applications display to the end-user graphical screens which enable overview several parameters or scenarios of the plant activities.

Nowadays MES screens are mostly developed in form of web-pages.

For example, with MES application suite SIMATIC IT, it is provided a Client Application Builder which is composed of a set of modules allowing users to build customized GUI screen-pages.

Typically, software suppliers develop a MES software-product as a general purpose solution to meet several and different customer requirements. As a consequence to it, also the collections of MES screens, which are supplied with the MES product, are designed to be general purpose in order to be used in various different situations.

However, since customers require that MES products be customized for a specific project fitting their specific needs, also the GUIs of MES screens need to be customized in order to satisfy the customer requirements of the specific project. This customer need is a fundamental one since the end-users, at the customer site, interact with the MES product mainly through the GUI of the MES-screens.

Hence, some enhancement needs of MES customers have to be fulfilled on the specific single project, so that the effectiveness and the usability of the MES solution are improved.

A first enhancement need of MES customers regards the way data are inputted.

For example, some MES customers prefer to input a particular data through a simple textbox and some other customers prefer to input the same data through a combo box that is already pre-filled with a set of values. Or in another simplified example, some customers wish to be notified that the data input in a field is wrong through an asterisk, other customers wish that the notification of occur via a change of the background color of the input field. In more advanced scenarios, MES end-user require that the gathering of the input data is done through external sources that need custom interface, such as custom browsers or charts.

A second enhancement need of MES customers regards the customization of the master-detail view.

In fact, MES screens are very often designed with a master-detail view: i.e. a grid or tree represents the main entity of the screen page and through the selection of a specific item; its details are shown.

Unfortunately, the details that each customer wants to see are often different and specific for a specific factory requirement. These details are usually related to a "master" entity in the page. Typically, the detail information can be view through a panel control or alternatively can be logically grouped through a tab control in different tab-panels.

There are three typical technical requirements that need to be met in screens designed with the master/details view.
i) A first typical technical requirement is to hide some details that were defined in the general purpose screen of the MES product.
ii) A second technical requirement is to add some additional details that were not defined in the general purpose screen of the product.
iii) A third technical requirement is to contextualize the added details so that they are aware of the original page and they behave accordingly.

Finally the added controls cannot work correctly without being aware of the original

Hence it is seen that, since different MES customers have different requirements, different types of customizations are needed.

In the art, the customization problem of MES screen has been solved in two ways.

According to a first way, the source codes of the screens are delivered to the system engineers or to the system integrators that modify them according to the required customizations. This action has relevant cost impacts in terms of required time and efforts. In addition, another drawback is that the proprietary source code is exposed to third parties that who often are not employees of the software developing company with an evident intellectual property problem.

According to a second way, the screens are developed from scratch by the software developers in order to meet the customer needs. A brand new web-page, in replace of the original one, is to be created containing the required customizations. Unfortunately this second way has the drawback that it is not possible to develop general-purpose screens but only project-specific ones. The customization is customer-specific: a new modified version of the page is created. This action has a very high effort: effort of time for the analysis of the original page (the person who customize the screen is not usually the same who created it); effort of time to modify the page; effort of time to test the page (also some solid regression test is needed); effort to maintain a different version of the same page for different customers

Unfortunately, in both known ways of customizing MES web-screens, the source code of the web-page has to be modified. This fact implies that the source code of the product-delivered screens needs to be completely tested again, with the relevant cost impacts in terms of time and efforts, also taking into account requirements on code maintenance and upgrades.

Moreover, with known methods of customizing MES web-screens, not only the development and customization efforts are increased but also the reusability of the delivered web-screens is reduced.

For example, in known methods of customizing web-screens in order to obtain one of the two above mentioned enhancements, i.e. the customization of the way of inputting data or of the master-detail view, an ASP.NET control (user or custom) is used, hosted on the web-page. However, unfortunately this customization is accomplished by adding and coding an ASP.NET control within the page by having access to the source code of the page with the above described drawbacks.

It is therefore the aim of the present invention to overcome the above mentioned drawbacks, in particular by providing a method and a system for customizing a GUI of a MES screen without modifying the source code of the web-screen.

The aforementioned aim is achieved by a method and a system as described in the appended claims.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments of the invention advantageously enable customizations by changing the page configuration through a dedicated tool so that the source code is not modified.

Embodiments of the invention conveniently lead to cost reductions, for the following reasons:
- Required efforts for customizing the web screens are reduced.
- Required maintenance of the software product is reduced.
- The approach is less error prone
- No need of an exhaustive analysis and of knowledge of the original page design.
- No regression test is needed for the web-page.

The customizations implemented through the proposed invention are not coded on the page so that in case of error they can be removed without affecting the original functionality of the original page supplied by the product.

Only a single version of the page exists. At most only different additional ASP.net controls are created, which can be advantageously reused in all screens and dynamically applied on demand. This leads to less maintenance cost.

With invention embodiments, the intellectual property of the original page is preserved.

According to a first embodiment of the invention, which specify a custom procedure for inputting input data in the user-interface of the page-screen, may advantageously allow switching through some pre-defined editors without writing a single line of code. Examples of pre-defined editors may include textbox with custom validation, combo-box with items dynamically defined, date pickers and others. Alternatively, a more complex extent of flexibility may be offered by allowing the use of totally custom interface. In this case a piece of code containing the custom interface may be conveniently written and it will be dynamically loaded and it will replace the original one. This interface will consume the data gathered from the grid/detail and will provide to the grid/details the data input of the user. The skilled in the art easily appreciates that in order to write this piece of code an in-depth knowledge of the original page is not needed and that the piece of code can be easily shared all over the pages.

According to a second embodiment of the invention, which specify a custom procedure for designing a master/detail view in the user-interface of the screen-page in the user-interface of the page-screen, may enable to meet the three above mentioned technical requirements:
i) Through the configuration tool may be for example easy to configure which tab panel of the tab control needs to be shown.
ii) Through the configuration tool may be for example possible to add new tab panels to the tab control. In addition, if desired, it is possible to configure the content of the added tab panel. This content is formed by custom controls that can contain any graphic elements. Hence, conveniently, information not initially conceived by the page developer can be added on demand. Moreover, these controls can be reused in multiple pages, saving effort and time of development.
iii) Finally the added controls cannot work correctly without being aware of the original page. For this reason in the page has been created a repository containing context information for all the controls of the page. Each control gives information about its state: for example the grid gives information about the selected record, the filter control about the filter that it is applying, the toolbar about the button that is being clicked, and so on. Using this information, the added control knows the state of the page and they can act consequently: for example they can show information contextualized with the selected record of the grid.

All this can be accomplished without modifying the source code of the original page, but only adding ASP.NET controls that have been created during the development of a specific project for a specific customer: these controls can therefore contain all the customizations needed by the specific customer requirements.

### Brief Description of the Drawings

The invention will now be described in preferred but not exclusive embodiments with reference to the accompanying drawings, wherein:
- Figure 1: is a snapshot example taken from an input grid of a page-screen GUI according to a first example embodiment of the present invention
- Figure 2: is a snapshot example taken from a modified version of the input grid of Figure 1 according to the first example embodiment of the present invention;
- Figure 3: is a snapshot example of a GUI configuration editor of the GUI configuration tool, according to the first example embodiment of the present invention;
- Figure 4: is a snapshot example taken from a master grid with a set of MES entities in a page-screen GUI, delivered with a general purpose MES software product, according to a second example embodiment of the present invention;
- Figure 5: is a snapshot example of the tab-control containing a tab-panel called "Break Detail" with some detail information in form of records according to the second embodiment of the present invention;
- Figure 6: is snapshot example of a GUI configuration editor of the GUI configuration tool, according to the second example embodiment of the present invention.

The two invention embodiments are described below.

In both invention embodiments, a user-interface of a page-screen of a general purpose MES software application taking into account some specific customer requirements is customized.

Within the MES application, it is present at least one page-screen containing at least one configurable graphic control, that contains at least one area that can be customized, herein called custom area.

A graphic configuration tool enables the configuration of the configurable graphic control of the page-screen user-interface in at least one custom area.

At engineering time, through the configuration tool, the page-screen is explored so that, a tree is presented in which each node represents a configurable graphic control.

At engineering time, a given node is selected representing a given configurable graphic control and at least one associated custom area to be customized according to a given specific customer requirement.

At engineering time, an ASP.net control is developed by writing its software code in order to meet the given specific customer requirement.

At engineering time, through the configuration tool, it is specified the information of the developed additional ASP.net control for linking it to the custom area of the configurable graphic control. Examples of such information may be the fully qualified name for custom control or the site relative path for a user control. Advantageously, upon request, parameters can be configured, at engineering time, in order to be sent, at run time, to the additional ASP.net control. Through the configuration tool it is possible to define for each field of a grid if the standard interface defined in the original page or a different one is to be used.

At engineering time, the information for linking the custom area of the given configurable graphic control is stored on the web server or on a database.

At run time, a user-interface of a screen of a general purpose MES software application may advantageously be displayed with the above described customizations.

### First Embodiment: data input

According to a first embodiment of the present invention, through the configurable graphic control may be conveniently possible to specify a custom procedure for inputting input data in the user-interface of the screen-page. For example, the type of the configurable graphic control may be grid type or detail grid type.

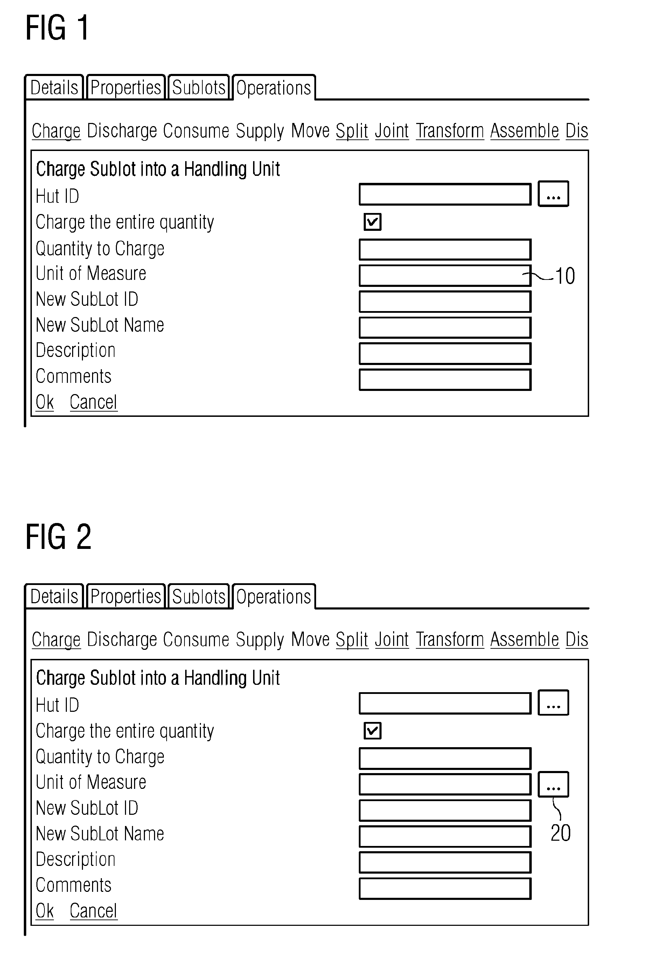

Figure 1 is a snapshot example taken from an input grid of a page-screen GUI according to the first example embodiment of the present invention.

For example, at run time, the end-users (e.g. line personnel) use the GUI shown in Figure 1 to input the required input-fields (e.g. Quantity to charge, Unit of Measure etc) of a given MES entity of operations for charging the sub-lot into a handling unit.

The page-screen GUI example shown in Figure 1 is a predefined page-screen GUI delivered to the customer with the general purpose MES software application.

Let us assume that the customer wishes to improve the usability of this predefined GUI by modifying the way data is inputted.

Advantageously, with the first embodiment of the present invention, at engineering time, the system engineer is enabled to modify, within the predefined graphic screen in a custom area, the editor for data input, without accessing the source code.

For example, in the snapshot of input grid of Figure 1, at the field "Unity of Measure" 10, with the general purpose product, it is originally foreseen the use of a simple textbox where the user has to digit with a free hand the desired unity of measure. The system engineer wishes, instead, to improve the GUI by supplying, for example, a browser presenting a set of selectable unities of measure.

The objective of the system engineer is to have a customized input form as the one shown in Figure 2. Figure 2 is a snapshot example taken from a modified version of the input grid of Figure 1, according to the first example embodiment of the present invention.

In Figure 2 the entry "Unity of Measure" of the input grid has been customized according to the requirement of the system engineer so that, at run-time, by clicking the button 20 an the left of the entry "Unity of Measure", a browser of selectable options is displayed.

The customization shown in Figure 2 is implemented, according to the present invention, through a GUI configuration tool.

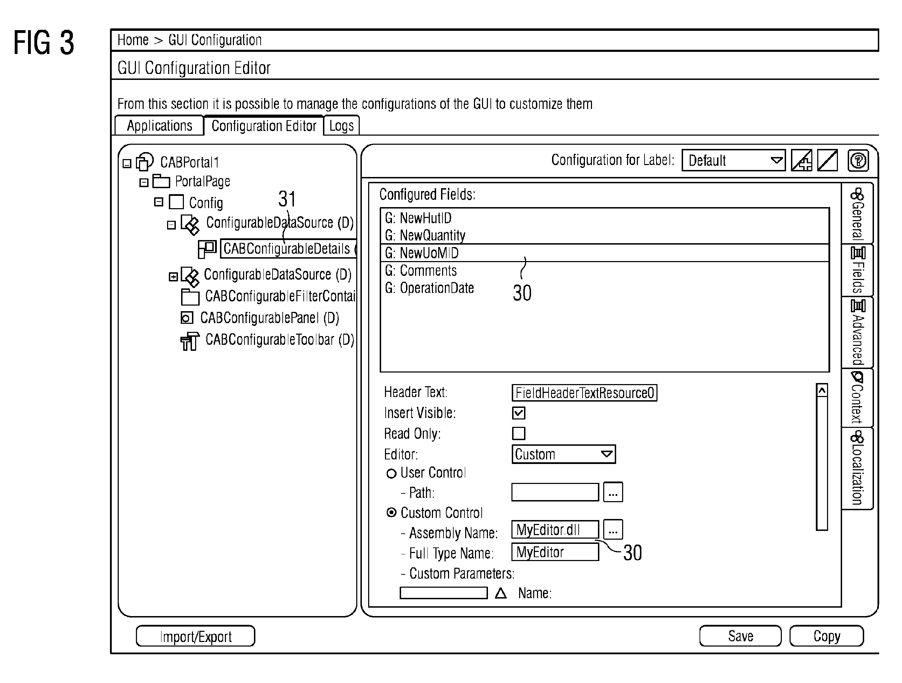

Figure 3 shows a snapshot example of a GUI configuration editor of the GUI configuration tool, according to the first example embodiment of the present invention.

The configuration tool explores the website that hosts the page and presents on a tree the point of configuration of the system. Thus, the configuration tool may show for each page-screen of the website that compose the MES application a tree in which each node is a configurable graphic control that can be configured by the configuration tool.

For this specific example, as shown in Figure 3, from the configurator tool it is possible to select a specific configurable operation input grid, e.g.

"CabConfigurableDetails" 31, and specify that for the "Unit of Measure" field it is desired to use as input editor a specific ASP.net control developed by the system engineer, in this case a custom control. With the custom editor 30, to the newly developed ASP.net custom control "NewUoMID" it is assigned the assembly name myEditor.dll.

### Second Embodiment: master-detail view

According to a second embodiment of the present invention, through the configurable graphic control may be advantageously possible to specify a custom procedure for for adding detail information to a master/detail view in the user-interface of the screen-page. For example, the type of the configurable graphic control may be tab type or panel type.

In this embodiment, a communication mechanism placed in the page-screen is preferably provided to allow at run time exchanging information between a configurable graphic control already present in the page-screen and the developed ASP.net control.

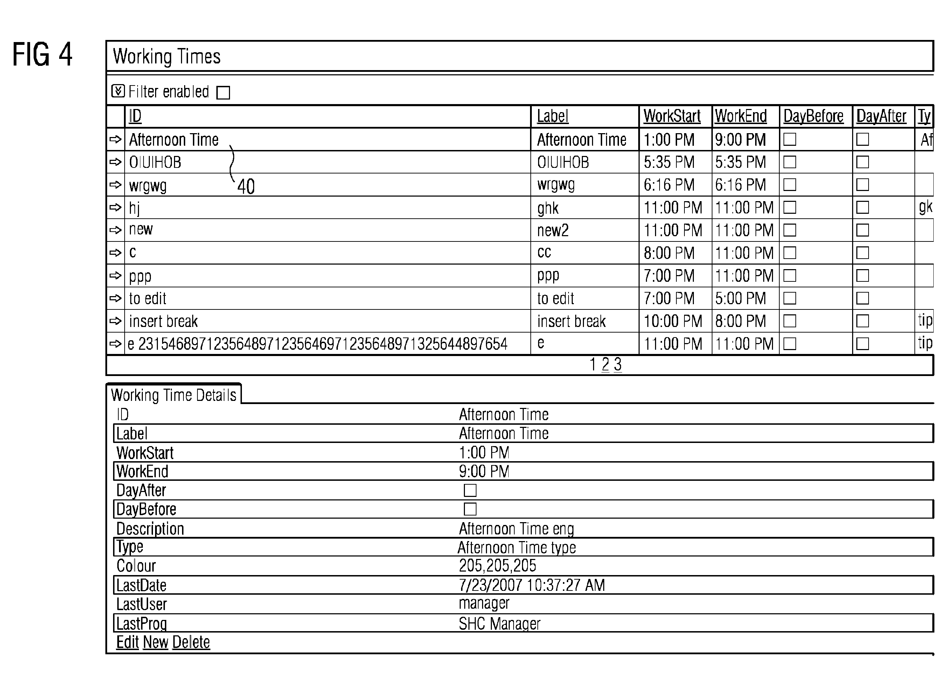

Figure 4 is a snapshot example taken from a master grid with a set of MES entities in a page-screen GUI, delivered with a general purpose MES software product, according to a second example embodiment of the present invention.

Let us assume that the customer wishes to improve the usability of this predefined page-screen by adding to it in a custom area one or more control that extends the original page, containing for instance some details about a selected entry on a master grid..

As shown in the snapshot of the master grid of Figure 4, for the entity "Afternoon Time" 40, it is foreseen, upon selection, a detailing tab-panel called "Working Time Details" 41.

Let us assume that the system engineer wishes to improve the user interface by adding in a custom area a custom control containing for instance some details about a selected entry on a master grid. For example, in this specific example, the system engineer wishes to add a new detailing tab-panel providing other detailing information about the selected entry on the master grid, e.g. by adding a tab-panel called "Breaks" 50 containing break details on the same selected entry "Afternoon Time" 40 of the master grid.

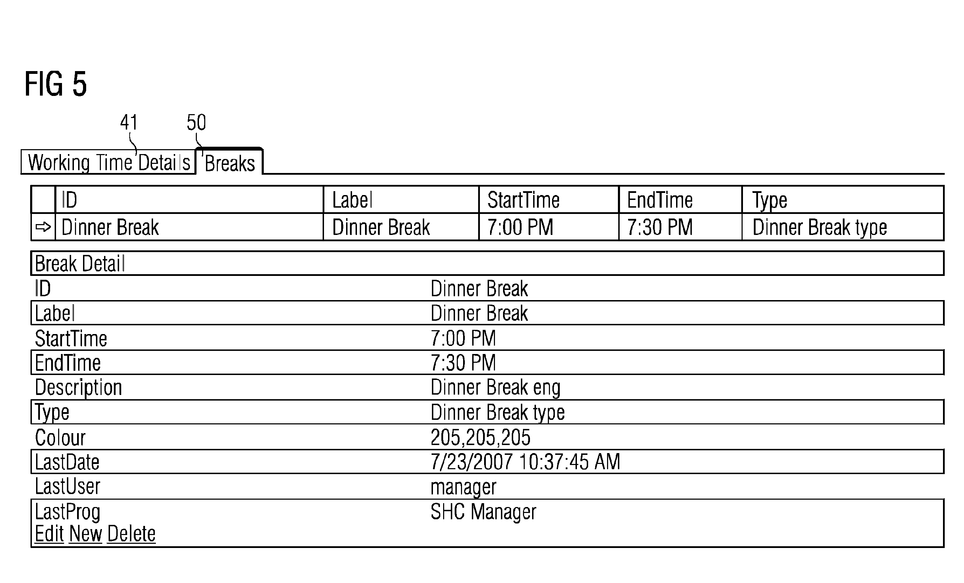

Figure 5 shows a snapshot example of of the tab-control containing a tab-panel called "Breaks" with some break detail information in form of records according to the second embodiment of the present invention.

The customization shown in Figure 5 is implemented, according to the present invention, through a GUI configuration tool.

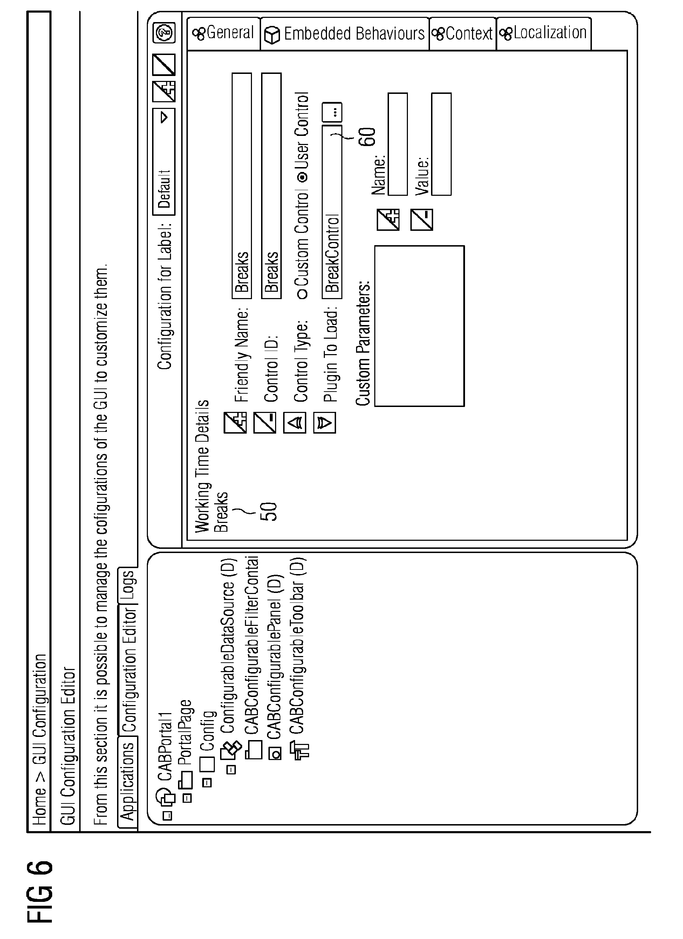

Figure 6 shows a snapshot example of a GUI configuration editor of the GUI configuration tool, according to the second example embodiment of the present invention.

The configuration tool explores the website that hosts the page and presents on a tree the point of configuration of the system.

For this specific example, as shown in Figure 6, from the configurator tool it is possible to add, to the configurable graphic tab control, a tab panel called "Breaks" 50 and specify to load a specific ASP.net control developed by the system engineer, in this case a user control called "BreakControl" 60. With the custom editor shown in Figure 6, to the ASP.net user control 60 it is assigned the Friendly Name and Control ID "Breaks".

In addition to the embodiments of the present invention described above, the skilled persons in the art will be able to arrive at a variety of other arrangements and steps which, if not explicitly described in this document, nevertheless fall within the scope of the appended claims. For example, with embodiments of the present invention, it is possible to modify the master view in the master-detail view.

### List of used acronyms

- GUI: Graphical User Interface
- IT: Information Technology
- MES: Manufacturing Execution System

## Claims

1. A method for customizing a user-interface of a screen of a general purpose MES software application taking into account a specific customer requirement, the screen being a web-page, hereinafter called page-screen;
the method comprising the steps of:
a) providing within the MES application at least one page-screen containing at least one configurable graphic control that contains at least one area that can be customized, hereinafter called custom area;
b) providing a graphic configuration tool for enabling the configuration of the configurable graphic control of the page-screen user-interface in at least one custom area;
c) at engineering time, through the configuration tool, exploring the page-screen so that, a tree is presented in which each node represents a configurable graphic control;
d) at engineering time, selecting a given node representing a given configurable graphic control and at least one associated custom area to be customized according to a given specific customer requirement;
e) at engineering time, developing an ASP.net control by writing its software code in order to meet said given specific customer requirement;
f) at engineering time, specifying, through the configuration tool, the information of the developed additional ASP.net control for linking it to the custom area of the configurable graphic control;
g) at engineering time, storing the information for linking the custom area of the given configurable graphic control on the web server or on a database.

2. The method according to claim 1, wherein the configurable graphic control specifies a custom procedure for inputting input data in the user-interface of the screen-page.

3. The method according to claim 2, wherein the type of the configurable graphic control may be grid type or detail grid type.

4. The method according to claim 1, wherein through the configurable graphic control it is specified a custom procedure for adding detail information to a master/detail view in the user-interface of the screen-page.

5. The method according to claim 4, wherein the type of the configurable graphic control may be tab control type or panel control type.

6. The method according to claim 4 or 5, further comprising the step of providing a communication mechanism placed in the page-screen to allow at run time exchanging information between a configurable graphic control already present in the page-screen and the developed ASP.net control.

7. The method according to any of the previous claims, wherein the ASP.net custom control may be a custom control or a user control.

8. A method for displaying, at run time, a user-interface of a screen of a general purpose MES software application customized according to the method of any of the previous claims.

9. The method according to any of the previous **characterized in that** it is implemented in software.

10. A system having means for performing the steps of the method according to any of the previous claims.
